(19) Europäisches Patentamt
European Patent Office
Office européen des brevets

(11) **EP 2 131 176 A1**

(12) **DEMANDE DE BREVET EUROPEEN**

(43) Date de publication:
**09.12.2009 Bulletin 2009/50**

(51) Int Cl.:
***G01M 13/02*** *(2006.01)*

(21) Numéro de dépôt: **09305488.0**

(22) Date de dépôt: **28.05.2009**

(84) Etats contractants désignés:
**AT BE BG CH CY CZ DE DK EE ES FI FR GB GR
HR HU IE IS IT LI LT LU LV MC MK MT NL NO PL
PT RO SE SI SK TR**

(30) Priorité: **05.06.2008 FR 0803134**

(71) Demandeur: **Renault s.a.s.
92100 Boulogne-Billancourt (FR)**

(72) Inventeurs:
• **Ponge, Jérôme
91150, ETAMPES (FR)**
• **Rousseau, Xavier
94260, FRESNES (FR)**

(54) **Système et procédé et simulation de rendements variables de boîtes de vitesses sur banc d'essais moteurs de simulation de véhicules**

(57) La présente invention concerne un système et un procédé de simulation de rendements variables de boîtes de vitesses sur banc d'essais moteurs de simulation véhicules, le système étant **caractérisé en ce qu**'il comporte un module (14) de calcul de pertes agencé pour déterminer, d'une part, des pertes liées à l'évolution de la température de l'huile de boîte de vitesses et, d'autre part, des pertes par traînée lorsque la boîte de vitesses est au point mort, le module (14) de calcul comprenant des moyens (32) de commande agencés pour commander un couple supplémentaire à appliquer au moteur en fonction des valeurs desdites pertes liées à l'évolution de la température de l'huile de boîte de vitesses et/ou des valeurs desdites pertes de traînée lorsque la boîte de vitesses est au point mort

Figure 1

EP 2 131 176 A1

**Description**

Le secteur technique de la présente invention est celui des bancs d'essais simulant en outre une boîte de vitesses, par exemple une boîte de vitesses mécanique d'un véhicule. La présente invention concerne plus particulièrement la simulation de pertes qui se produisent dans les boîtes de vitesses pour optimiser les simulations lors de tests sur bancs d'essais moteurs de simulation véhicules.

Aujourd'hui, sur certains bancs d'essais moteurs, une charge représentative d'un véhicule est simulée, par exemple afin de travailler sur le cycle d'homologation européen appelé « NEC » ou à d'autres fins. Pour cela, on utilise un système de simulation véhicule de fournisseurs de bancs d'essais qui permet de simuler les pièces manquantes d'un véhicule lorsque l'on se trouve sur un banc moteur. Le but de ces bancs d'essais est d'appliquer un couple au moteur, tel que cela aurait été le cas avec le véhicule complet. Ces bancs sont appelés « bancs d'essais moteurs de simulation véhicule ».

Ce système présente certaines lacunes, notamment concernant la simulation de la boîte de vitesses du véhicule. Il est possible de renseigner différents paramètres caractéristiques d'une boîte de vitesses (rapport de pont, rapport de chaque vitesse...). Les rendements mécaniques pour chaque rapport sont également paramétrables mais seulement à une valeur fixe. Ces rendements traduisent une part de couple qui est absorbée (perdue) dans la boîte de vitesses (frottements, échauffements...).

En réalité, cette part de couple perdue est fonction de plusieurs paramètres tels que le régime d'entrée ou de sortie de boîte, le couple d'entrée ou de sortie de boite, les caractéristiques de l'huile, la température de l'huile... Ainsi, le fait d'appliquer un rendement fixe dans toutes les phases de fonctionnement n'est pas représentatif de la réalité. Principalement, il est très important de prendre en compte l'évolution des pertes liées à l'évolution de la température de l'huile de boîte de vitesses pour rendre compte des rendements variables des boîtes de vitesses. Un autre phénomène également important et non pris en compte dans la simulation proposée concerne les pertes à vide : ces pertes représentent les pertes par traînée lorsque la boîte de vitesses est au point mort.

Ces différentes lacunes se traduisent par une mauvaise corrélation du couple fourni par le moteur entre un cycle d'essais (par exemple « NEDC » ou autre) qui est réalisé sur ce type de banc où la charge est simulée et un cycle dit « de référence » qui est pratiqué avec le véhicule complet sur un banc à rouleau.

La demande de brevet européen EP 1877 750 ne simule pas le couple de frottement de la boîte de vitesses mais le comportement mécanique de la boîte de vitesses et ne permet donc pas de tenir compte des pertes de rendement de la boîte de vitesses. Le brevet européen EP 0 340 206 concerne un banc équipé d'un système pour simuler une boîte automatique mais utilise pour cela un dispositif complet placé entre le moteur et une unité de charge, la simulation des états de marche du véhicule créant des signaux de commande qui sont transmis au moteur et à l'unité de charge. De plus, ce banc simule le comportement oscillatoire en représentant le système moteur-véhicule comme un oscillateur à deux masses. Ces documents ne décrivent donc pas de solution permettant de simuler les pertes de couple dans la boîte de vitesses pour rendre compte des rendements variables d'une boîte de vitesses.

L'invention propose de combler une ou plusieurs lacunes de l'art antérieur concernant la simulation d'équipement de charge du moteur tel qu'une boîte de vitesses d'un véhicule afin d'obtenir une meilleure corrélation du couple fourni par le moteur entre un cycle d'essais réalisé sur un banc d'essais moteur avec une charge simulée et un cycle dit « de référence » que l'on pratique avec le véhicule complet sur un banc à rouleau.

Ce but est atteint par un système de simulation de rendements variables de boîtes de vitesses sur bancs d'essais moteur de simulation véhicules comprenant un module (10) de simulation contrôlant une génératrice (2) appliquant à un moteur (3) un couple représentatif de la charge d'un véhicule, **caractérisé en ce qu'**il comporte un module de calcul de pertes agencé pour déterminer, d'une part, des pertes liées à l'évolution de la température de l'huile de boîte de vitesses et, d'autre part, des pertes par traînée lorsque la boîte de vitesses est au point mort, le module de calcul comprenant des moyens de commande agencés pour commander un couple supplémentaire à appliquer au moteur en fonction des valeurs desdites pertes liées à l'évolution de la température de l'huile de boîte de vitesses et/ou des valeurs desdites pertes de traînée lorsque la boîte de vitesses est au point mort.

Selon une autre particularité, le module de calcul de perte est agencé pour calculer diverses valeurs de couple à appliquer au moteur en fonction du temps écoulé depuis le démarrage de la simulation et/ou du rapport de boîte qui est engagé d'après la simulation.

Selon une autre particularité, les moyens de commande sont agencés pour commander au moins un dispositif actionneur agencé pour appliquer au moteur le couple calculé par le module de calcul de pertes.

Selon une autre particularité, le dispositif actionneur est un alternateur, les moyens de commandes étant agencés pour délivrer une puissance électrique variable adaptée pour que l'alternateur délivre au moteur le couple calculé par le module de calcul de pertes.

Selon une autre particularité, les moyens de commande transmettent les valeurs de couple calculées par le module de calcul de pertes directement à une génératrice appliquant un couple simulant une charge représentative d'un véhicule, de manière à ce que la génératrice applique le couple simulant la charge du véhicule calculé par un module de simulation et le couple représentatif des pertes calculé par le module de calcul de pertes.

Un autre objectif de l'invention est de proposer un procédé de pilotage d'un actionneur permettant la simulation de boîte de vitesses d'un véhicule en introduisant des rendements mécaniques variables concernant le couple absorbé par la boîte de vitesses.

Cet objectif est atteint grâce à un procédé de simulation de rendements variables de boîtes de vitesses mécaniques sur banc d'essais moteurs de simulation véhicules **caractérisé en ce qu'**il comprend les étapes suivantes :

- détermination des pertes liées à l'évolution de la température de l'huile de boîte de vitesses,
- détermination des pertes par traînée lorsque la boîte de vitesses est au point mort
- commande d'un couple supplémentaire à appliquer au moteur en fonction des valeurs desdites pertes liées à l'évolution de la température de boîte de vitesses et/ou des valeurs desdites pertes par traînée lorsque la boîte de vitesses est au point mort.

D'autres buts, caractéristiques et avantages de l'invention apparaîtront à la lecture de la description suivante, de quelques exemples nullement limitatifs, et faisant référence aux dessins annexés, sur lesquels :

- La figure 1 est un schéma représentant un mode de réalisation d'un système de simulation de rendements variables de boîtes de vitesses mécaniques sur banc d'essais moteurs de simulation véhicules,
- La figure 2 est un schéma représentant un autre mode de réalisation d'un système de simulation de rendements variables de boîtes de vitesses mécaniques sur banc d'essais moteurs de simulation véhicules,
- La figure 3 est un schéma représentant un mode de réalisation d'un système de simulation de rendements variables de boîtes de vitesses mécaniques sur banc d'essais moteurs de simulation véhicules.

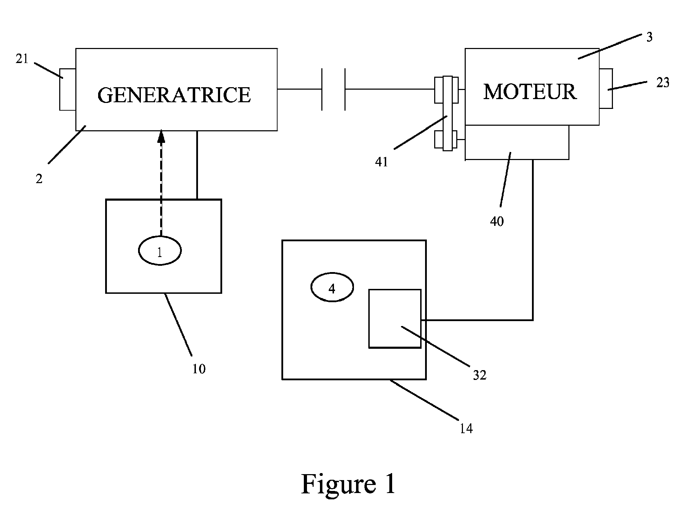

La présente invention concerne un système et un procédé de simulation de rendements variables de boîtes de vitesses sur banc d'essais moteurs de simulation véhicules. Dans les bancs d'essais moteur, en général, un module (10) de simulation contrôle une unité (ou machine) de charge appelée génératrice (2) appliquant à un moteur (3) un couple représentatif de la charge d'un véhicule. Dans la présente description, les divers modes de réalisation présentés à titre d'exemples illustratifs réfèrent à des boîtes de vitesses mécaniques mais il doit être évident pour l'homme de métier que l'invention peut être utilisée également pour la simulation de boîte de vitesses robotisées, de boîtes séquentielles, de boîtes automatiques ou tout type de boîte de vitesses dans la mesure où elles peuvent avoir des rendements variables tels qu'expliqués ci-après. Comme particulièrement visible sur la figure 1, les bancs d'essais utilisent en général un calcul (1) de simulation de la charge du véhicule qui doit être appliquée au moteur (3), par exemple au niveau du vilebrequin. Ce calcul (1) de simulation correspond au couple résultant de la charge du véhicule et tient donc compte de paramètres tels que, par exemple, la masse du véhicule, les inerties des pièces en rotation, etc. Le couple résultant de ce calcul (1) est appliqué au moteur (3) par l'intermédiaire d'un dispositif (2) de charge appelé « génératrice ». En fonction du résultat du calcul (1) de simulation, la génératrice (2) applique donc le couple calculé au moteur (3). Ce calcul (1) peut être réalisé par un module (10) de simulation, implémenté dans le banc d'essais. Par le terme module utilisé dans la présente description, on entend tout type de dispositif, agencement ou moyen agencé pour réaliser les calculs décrits ici. Par exemple, il doit être évident pour l'homme de métier qu'un tel module peut être implémenté sous la forme d'une application logicielle exécutée sur un microprocesseur et/ou sous la forme d'un circuit électronique spécifique et/ou tout autre moyen apte à délivrer les valeurs de pertes calculées. Le module (10) de simulation pourra par exemple être implémenté sous la forme d'un logiciel de simulation exécuté sur un ordinateur relié à la génératrice (2) ou exécuté sur un microprocesseur directement implanté dans la génératrice (2) et/ou un circuit électronique spécifique relié à, ou implanté dans, la génératrice (2).

Après avoir réalisé une étude de caractérisation de différentes boîtes de vitesses, il est possible de définir un jeu de formules permettant de calculer le couple absorbé par une boîte de vitesses, notamment en fonction de ses caractéristiques. Ainsi, une base de données peut être établie pour regrouper les paramètres caractéristiques des différentes boîtes de vitesses étudiées. Plus précisément, la présente invention est basée sur l'étude des différentes pertes des boîtes de vitesses, pour différentes boîtes de vitesses. Les bancs d'essais simulent le couple normalement absorbé dans la boîte de vitesses et la présente invention permet de simuler les pertes supplémentaires de couple dans la boîte de vitesses en fonction de ses caractéristiques. Les pertes sont généralement fonction de paramètres tel que le régime moteur, le couple, la température de l'huile, le rapport de boîte, etc... L'étude de diverses boîtes de vitesses mécaniques a donc permis de créer un jeu de formules permettant de converger rapidement vers l'essai de référence. Pour une boîte de vitesses simulée, on utilise un jeu de paramètres connu (d'après la base de données) qui est ajustable facilement si nécessaire, par exemple dans le cas où des plages de fonctionnement resteraient mal corrélées (entre le cycle d'essais et le cycle de référence). Les résultats de ces calculs permettent donc de définir un couple supplémentaire qui est perdu dans la boîte et qui n'était pas pris en compte dans la simulation du banc d'essais dans laquelle la boîte de vitesses fonctionne à un rendement fixe. Ensuite, il est possible d'utiliser cette valeur de couple supplémentaire calculée afin de piloter un actionneur pour que le moteur « voit » ce couple supplémentaire à produire pour compenser les pertes dans la boîte de vitesses.

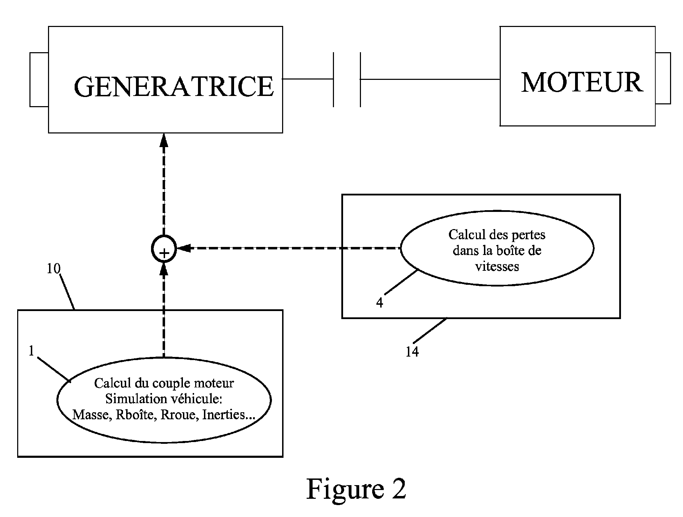

En particulier, les bancs d'essais simulent en fait une boîte de vitesses avec une vitesse engagée et une huile chaude. Il est donc intéressant de simuler également les conditions dans lesquelles l'huile de la boîte est froide et/ou dans lesquelles la boîte est au point mort. Ainsi, la présente invention utilise un calcul (4) des pertes supplémentaires dans la boîte de vitesses. Ce calcul (4) est réalisé par un module (14) de calcul de pertes. Ce module (14) peut naturellement être intégré directement dans le module (10) de simulation ou peut en être séparé. De plus, dans certains modes de réalisation, le calcul (4) réalisé par ce module (14) est ajouté au calcul (1) du module (10) de simulation pour contrôler directement le couple appliqué au moteur (3) par la génératrice (2), comme représenté par exemple sur la figure 2. Dans d'autres modes de réalisation, le module (14) de calcul des pertes contrôle au moins un dispositif (40) actionneur permettant d'appliquer les pertes calculées directement sur le moteur (3) (sans passer par la génératrice), comme détaillé ci-après et représenté sur la figure 1.

Le jeu de formules issu de l'étude de diverses boîtes de vitesses mécaniques est utilisé par le module (14) de calcul des pertes pour le calcul (4) des pertes de rendement dans la boîte de vitesses. Ce jeu de formules permet de dissocier différentes phases de fonctionnement :

> ➢ Moteur chaud, véhicule roulant :

> Il est considéré que, pour ces phases de roulages, le rendement fixe de la boîte de vitesses simulé par le simulateur correspond assez bien à la réalité: aucun couple supplémentaire n'est appliqué pour ces phases de fonctionnement.

> ➢ Moteur froid, véhicule roulant :

> Pour ces phases de roulages, la formule (I) suivante est appliquée :

$$Cpf(T) = Cp20° * (\frac{Tcf - T}{Tcf}\frac{}{15})^{K1}$$

> Avec :

> - Cpf(T) (N.m) qui correspond à la part de couple supplémentaire absorbé par la boîte de vitesses avec un rapport engagé, en fonction du temps,
> - Cp20° (N.m) qui correspond au couple absorbé par la boîte de vitesses avec un rapport engagé, lorsque la température d'huile de boîte de vitesses est à 20°C environ c'est-à-dire lorsque l'huile de boîte de vitesses est « froide »,
> - Tcf (s) qui correspond à l'instant du cycle où l'on considère que la température d'huile de boîte de vitesses n'influence plus les pertes dans la boîte de vitesses c'est-à-dire au passage de l'huile « froide » à l'huile « chaude »,
> - K1 qui correspond au coefficient permettant de prendre en compte l'aspect non linéaire de l'évolution de la température dans une boîte de vitesses réelle.
> - T (s) qui correspond au temps écoulé depuis le démarrage du cycle d'essais.

> ➢ Véhicule non roulant ou boîte au point mort (simulation de la traînée de boîte de vitesses) :

> Pour ces phases de fonctionnement, les formules suivantes sont appliquées : Tant que T < Tcf (i.e., huile encore froide), la formule (II) suivante est appliquée :

$$Cpv(T) = (Cpvf - Cpvc) * (\frac{Tcf - T}{Tcf})^{K2} + Cpvc$$

> Ensuite, lorsque T≥Tcf (i.e., huile chaude), la formule suivante est appliquée:

$$Cpv(T) = Cpvc$$

Avec :

- Cpv(T) (N.m) qui correspond au couple absorbé par la boîte de vitesses au point mort, en fonction du temps.
- Cpvf (N.m) qui correspond au couple absorbé par la boîte de vitesses au point mort, lorsque la température d'huile de boîte de vitesses est à 20°C, c'est-à-dire lorsque ladite huile est « froide »,
- Cpvc (N.m) qui correspond au couple absorbé par la boîte de vitesses au point mort, lorsque la température d'huile de boîte de vitesses n'influence plus les pertes dans la boîte de vitesses c'est-à-dire lorsque l'huile est « chaude »,
- Tcf (s) qui correspond à l'instant du cycle où l'on considère que la température d'huile de boîte de vitesses n'influence plus les pertes dans la boîte de vitesses c'est-à-dire la température de passage de l'huile « froide » à l'huile « chaude »,
- K2 qui correspond au coefficient permettant de prendre en compte l'aspect non linéaire de l'évolution de la température dans une boîte de vitesses réelle,
- T (s) qui correspond au Temps écoulé depuis le démarrage du cycle d'essais (en secondes).

L'homme de métier comprend à la lecture de la présente description que la température de 20°C est un exemple et que c'est la valeur de température à laquelle l'huile n'influence plus les pertes qui importe, cette valeur pouvant varier selon le type d'huile utilisé et/ou selon le type de boîte de vitesses. Cette valeur aura été mise en évidence par les études citées précédemment. L'homme de métier comprendra également que l'on utilise ici le temps écoulé pour déterminer l'instant à partir duquel on considère que la température de l'huile n'influence plus les pertes dans la boîte. Dans le cadre d'une simulation, la température d'huile peut également être un paramètre défini dans la simulation et les formules peuvent donc être adaptées pour utiliser directement cette température simulée plutôt qu'un temps écoulé (les études des boîtes et les formules pouvant alors être adaptées le cas échéant). Enfin, l'homme de métier comprendra également que les conditions « véhicule non roulant ou boîte au point mort » peuvent être utilisées pour simuler un débrayage, par exemple lors de passages de vitesses, avec une température d'huile ayant atteint ou non, selon le cas, la valeur à laquelle elle n'influence plus les pertes.

On comprend que, grâce à ce jeu de formules utilisé dans le calcul (4) des pertes dans la boîte de vitesses, le module (14) de calcul des pertes est agencé pour prendre en compte les variations des propriétés des boîtes de vitesse au cours du temps. Ce module (14) de calcul est ainsi agencé pour, d'une part, déterminer des pertes liées à l'évolution de la température de l'huile de boîte de vitesses et pour, d'autre part, déterminer des pertes par traînée lorsque la boîte de vitesses est au point mort. De plus, ce module (14) comporte également des moyens (32) de commande agencés pour commander un couple supplémentaire à appliquer au moteur en fonction des valeurs desdites pertes liées à l'évolution de la température de l'huile de boîte de vitesses et/ou des valeurs desdites pertes de traînée lorsque la boîte de vitesses est au point mort. Ces moyens (32) de commande pourront, selon divers modes de réalisation, commander au moins un dispositif (40) actionneur ou directement la génératrice (2). Par le terme « moyens », on entend donc ici tout dispositif ou agencement agencé pour commander soit directement la génératrice (2) soit un dispositif (40) actionneur. Le module (14) de calcul ayant calculé le couple à appliquer, la valeur calculée est éventuellement convertie en grandeur utilisable par la génératrice (2) ou le dispositif (40) actionneur puis les moyens (32) de commande transmettent cette valeur à la génératrice (2) ou au dispositif (40) actionneur pour que le couple calculé soit effectivement appliqué au moteur (3). Par exemple, il doit être évident pour l'homme de métier que de tels moyens de commande pourront être intégrés directement dans le module (14) de calcul, par exemple sous la forme d'une application logicielle exécutée sur un microprocesseur et/ou sous la forme d'un circuit électronique spécifique et/ou tout autre moyen apte à délivrer les valeurs de pertes à appliquer (via une connexion adéquate).

La figure 1 représente un mode de réalisation du système de simulation de rendements variables de boîtes de vitesses mécaniques sur banc d'essais moteurs de simulation véhicules selon l'invention. Dans cet exemple de réalisation, le module (14) de calcul des pertes calcule les pertes dans la boîte de vitesses grâce au calcul (4) du jeu de formules décrit précédemment. Pour permettre d'obtenir une simulation tenant compte de ces pertes, le couple correspondant aux pertes calculées doit être répercuté sur le moteur (3). Dans certains modes de réalisation, comme représenté par exemple sur la figure 2, les moyens (32) de commande transmettent ce couple représentatif des pertes de rendement à la génératrice (2) qui permet d'appliquer ce couple directement au moteur. On comprendra que dans le cas où le module (14) est intégré dans le module (10) de simulation ou dans la génératrice, ces moyens (32) de commande sont simplement agencés pour transmettre (et éventuellement calibrer) à la génératrice ou au module (10) de simulation les valeurs calculées de façon à ce que la génératrice applique le couple désiré. Dans ce cas, le résultat du calcul (4) du module (14) de calcul de pertes est appliqué par la génératrice en plus du couple simulé par le module (10) de simulation. Dans d'autres modes de réalisation, ce couple représentatif des pertes est appliqué au moteur par l'intermédiaire d'un dispositif (40) actionneur, par exemple tel qu'un alternateur comme représenté sur l'exemple de la figure 1. En effet, un alternateur présente un couple qui peut être modulé en fonction de la charge électrique qui lui est appliquée. Les moyens (32) de commande du module (14) de calcul de pertes sont alors agencés pour commander le dispositif actionneur (40) qui applique le couple au moteur (3). Dans d'autres variantes de réalisation, le dispositif (40) actionneur peut être implémenté sous la forme d'un frein commandé par les moyens (32) de commande ou par tout dispositif permettant d'appliquer un couple au moteur (3).

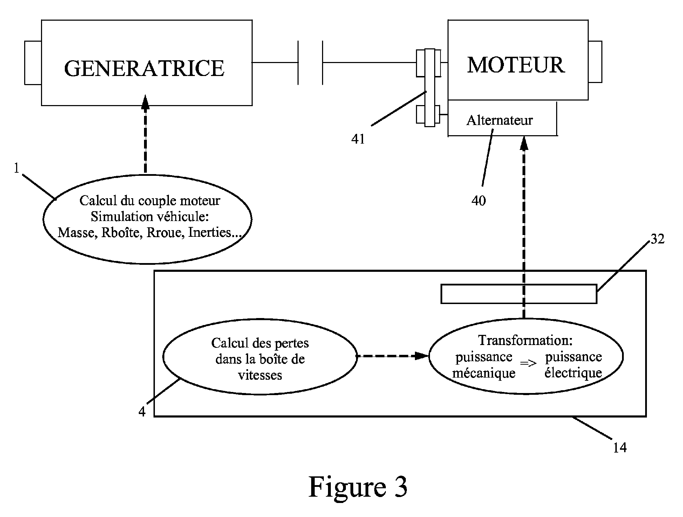

La figure 3 représente un mode de réalisation dans lequel le module (14) de calcul de pertes comprend des moyens (32) de commande contrôlant un dispositif (40) actionneur par l'intermédiaire d'une puissance électrique appliquée à ce dernier. Dans cet exemple, le calcul (4) des pertes dans la boîte de vitesses permet de déterminer un couple à appliquer au moteur pour simuler ces pertes. Le module (14) de calcul des pertes calcule ce couple représentatif des pertes puis calcule une puissance électrique à appliquer au dispositif (40) actionneur pour obtenir ce couple. Dans l'exemple représenté, le dispositif actionneur (40) est un alternateur relié au moteur par l'intermédiaire d'une courroie (41). Les paramètres mécaniques et électriques de l'alternateur et de la courroie sont pris en compte à l'avance pour connaître la puissance à appliquer à l'alternateur pour obtenir le couple désiré au niveau de la courroie. Un étalonnage permet par exemple de s'affranchir des variations qui peuvent exister pour ces paramètres. Par exemple, on peut faire une série d'hypothèses sur le rendement de l'alternateur, sur la tension fixe délivrée, sur la démultiplication etc., puis éventuellement réaliser des tests pour réunir ces paramètres sous une constante qui est utilisée pour le calcul de la puissance électrique à appliquer à l'alternateur. L'homme de métier appréciera naturellement les adaptations nécessaires en fonction des dispositifs (40) actionneurs utilisés. Par exemple, dans le cas d'un frein, si ce dernier utilise une commande mécanique, la puissance mécanique calculée pour le couple représentatif des pertes pourra être convertie par les moyens (32) de commande en puissance mécanique à appliquer au frein pour obtenir le couple désiré (en ayant au préalable déterminer les propriétés du frein, notamment le relation entre la puissance mécanique appliquée au frein et le couple appliquer par le frein sous l'effet de cette puissance mécanique). Si le frein utilise une commande électronique, les moyens (32) de commande pourront par exemple utiliser des signaux adaptés à la puissance mécanique que le frein doit délivrer. Dans le cas de l'alternateur, les moyens (32) de commande pourront être agencés pour délivrer directement une puissance électrique adaptée au couple désiré ou contrôler un autre dispositif permettant d'obtenir ce couple par l'alternateur, comme par exemple une résistance variable pilotée par les moyens (32) de commande. Grâce à cet agencement du système, on comprend donc que le dispositif (40) actionneur simule une partie du couple que subi le moteur à cause des pertes dans la boîte de vitesses. La génératrice quant à elle simule le comportement du reste du véhicule. Dans cette configuration, le couple absorbé par la boîte de vitesses est donc simulé par un dispositif distinct de celui simulant le reste des charges alors que dans d'autres configurations comme par exemple celle représentée sur la figure 2, la génératrice applique le couple représentatif du véhicule (avec les roues, la boîte de vitesses etc.) et le couple représentatif des pertes dans la boîte de vitesses. Cet agencement, plus compact que celui de la figure 1, ne nécessite pas de dispositif actionneur dans la mesure où la génératrice (2) applique directement l'ensemble des couples calculés au moteur (3).

Dans certains modes de réalisation, la génératrice (2) est commandée de manière à simuler un couple moteur correspondant au calcul (1) de la simulation du véhicule, par exemple la simulation « ISAC » du fournisseur de bancs d'essais AVL, qui dépend de paramètres comme la masse du véhicule ou encore l'inertie de certaines pièces de celui-ci. Dans certains modes de réalisation, la génératrice comprend un capteur (21) de couple connecté à la génératrice et agencé pour mesurer le couple appliqué par la génératrice, ainsi qu'un capteur (23) de régime connecté au moteur (3) et agencé pour mesurer le régime de ce dernier. D'une manière générale, le module (10) de simulation permet de gérer tous les paramètres de la simulation et permet même de contrôler le fonctionnement du moteur. Ainsi, le module (10) de simulation est relié à la génératrice (2) mais également au moteur (3), directement ou indirectement. Par exemple, pour gérer le régime du moteur, il est connu que le module (10) de simulation contrôle l'accélérateur relié au moteur (3). Afin d'être opérationnel et de pouvoir réaliser les calculs du couple résistant représentatif des pertes dans la boîte de vitesses, le module (14) de calcul des pertes est relié au module (10) de simulation contrôlant la génératrice pour recevoir un certain nombre de paramètres. En effet, pour permettre le calcul (4) des pertes, le module (14) de calcule des pertes doit connaître le temps qui s'est écoulé depuis le démarrage du moteur, afin de déterminer si la température de l'huile est inférieure à la valeur Tcf à laquelle elle n'influence plus les pertes. De même, le module (14) de calcul des pertes doit savoir si une vitesse est engagée ou si la boîte de vitesses est au point mort. Le module (10) de simulation peut naturellement fournir au moins un de ces paramètres au module (14) de calcule des pertes. Le module (10) de simulation ayant démarré un cycle de simulation, les données représentatives du temps écoulé sont connues et peuvent être transmises au module (14) de calcul des pertes. De même, le module (10) de simulation simulant la boîte de vitesses, les données représentatives de la vitesse (du rapport de boîte) qui est engagée sont connues et peuvent être transmises au module (14) de calcul des pertes. Il en est de même pour tout type de paramètre utile, notamment par exemple dans le cas d'une température définie dans la simulation (et de formules de calcul de pertes adaptées en conséquence). Dans d'autres variantes de réalisation, ces paramètres peuvent être mesurés par des capteurs adéquats.

Dans certains modes de réalisation, le système selon l'invention est installé sur le dispositif de banc d'essais et se met en marche dès le démarrage du moteur, en raison du jeu de formules utilisé pour les calculs (1, 4) des couples en fonction du temps, la variable temps T représentant le temps écoulé depuis le démarrage du cycle d'essais. Dans certains modes de réalisation de l'invention, le système peut être installé de manière permanente, amovible ou débrayable sur le banc d'essais.

Ainsi, les paramètres nécessaires au module (14) de calcul des pertes lui sont fournis et ce module (14) est agencé pour déterminer le couple représentatif des pertes à appliquer au moteur, en fonction des conditions dans lequel se trouve le moteur et qui sont définies dans la simulation. Par exemple, lorsqu'un rapport est engagé et que le moteur est froid (et l'huile de la boîte), le module (14) est informé par ces paramètres qu'il doit utiliser la formule (I) correspondante pour le calcul du couple tandis qu'il calculera un couple supplémentaire nul lorsque le véhicule est chaud avec un rapport engagé ou utilisera une autre formule lorsque ces paramètres changeront.

Plus précisément, dans le cas où le moteur est froid et le véhicule roule (d'après la simulation), c'est-à-dire au démarrage lorsque le véhicule roule, le module (14) de calcul de partes reçoit les informations relatives au rapport de boîte et au temps écoulé par exemple et calcule la valeur du couple résistant de boîte de vitesses correspondant avec l'équation (I) en fonction du temps écoulé depuis le démarrage du cycle d'essais. Lorsque le temps T est supérieur à Tcf, le module (14) de calcul délivre une valeur de couple constante nulle correspondant à l'absence de pertes supplémentaires dans la boîte de vitesses par rapport à la simulation de rendement de boîte fixe réalisée par le module (10) de simulation. Il n'y a pas de couple supplémentaire à appliquer pour ces phases de fonctionnement.

Dans le cas où le véhicule est au point mort (par exemple ne roule pas d'après la simulation) et le moteur est froid, c'est-à-dire au démarrage du véhicule lorsque le véhicule ne roule pas, le module (14) reçoit les informations relatives au temps écoulé depuis le démarrage du cycle (ou directement à la température, le cas échéant) et au rapport de boîte engagé (aucun, en l'occurrence) et calcule la valeur du couple résistant de boîte de vitesses correspondant avec l'équation (II) en fonction du temps écoulé depuis le démarrage du cycle d'essais. Puis lorsque le temps écouté atteint la durée Tcf, le couple à appliquer (en plus de celui représentatif du rendement fixe de la boîte et appliqué par la génératrice) devient constant et égal à Cpvc, c'est-à-dire au couple représentatif des pertes par traînée à chaud.

La valeur du couple représentatif des pertes, calculé par le module (14) de calcul des pertes est actualisée de manière continue dans le temps en fonction des valeurs des paramètres de la simulation, afin de modifier le couple supplémentaire appliqué au vilebrequin du moteur. Il est ainsi possible de contrôler le couple résistant transmis au moteur afin de simuler le comportement d'une boîte de vitesses sur banc d'essais en tenant compte des rendements mécaniques variables de la boîte de vitesses. Ceci est réalisé afin d'obtenir une meilleur corrélation du couple fourni par le moteur entre un cycle d'essais qui est réalisé sur les bancs avec charge simulée et un cycle dit « de référence » que l'on pratique avec le véhicule complet sur un banc à rouleau.

Les différents modes de réalisation du système décrit ci-dessus permettent la mise en ouvre d'un procédé de simulation de rendements variables de boîtes de vitesses sur banc d'essais moteurs de simulation véhicules. Ce procédé comporte au moins les étapes suivantes :

- **-** détermination des pertes liées à l'évolution de la température de l'huile de boîte de vitesses,
- **-** détermination des pertes par traînée lorsque la boîte de vitesses est au point mort
- **-** commande d'un couple supplémentaire à appliquer au moteur en fonction des valeurs desdites pertes liées à l'évolution de la température de l'huile de boîte de vitesses et/ou des valeurs desdites pertes de traînée lorsque la boîte de vitesses est au point mort.

Il doit être évident pour les personnes versées dans l'art que la présente invention permet des modes de réalisation sous de nombreuses autres formes spécifiques sans l'éloigner du domaine d'application de l'invention comme revendiqué. Par conséquent, les, présents modes de réalisation doivent être considérés à titre d'illustration mais peuvent être modifiés dans le domaine défini par la portée des revendications jointes.

**Revendications**

1. Système de simulation de rendements variables de boîtes de vitesses sur banc d'essais moteurs de simulation véhicules comprenant un module (10) de simulation contrôlant une génératrice (2) appliquant à un moteur (3) un couple représentatif de la charge d'un véhicule, **caractérisé en ce qu'**il comporte un module (14) de calcul de pertes agencé pour déterminer, d'une part, des pertes liées à l'évolution de la température de l'huile de boîte de vitesses et, d'autre part, des pertes par traînée lorsque la boîte de vitesses est au point mort, le module (14) de calcul comprenant des moyens (32) de commande agencés pour commander un couple supplémentaire à appliquer au moteur (3) en fonction des valeurs desdites pertes liées à l'évolution de la température de l'huile de boîte de vitesses et/ou des valeurs desdites pertes de traînée lorsque la boîte de vitesses est au point mort.

**2.** Système selon la revendication 1, **caractérisé en ce que** le module (14) de calcul de perte est agencé pour calculer diverses valeurs de couple à appliquer au moteur en fonction du temps écoulé depuis le démarrage de la simulation et/ou du rapport de boîte qui est engagé d'après la simulation.

**3.** Système selon la revendication 2, **caractérisé en ce que** les moyens (32) de commande sont agencés pour commander au moins un dispositif (40) actionneur agencé pour appliquer au moteur (3) le couple calculé par le module (14) de calcul de pertes.

**4.** Système selon la revendication 3, **caractérisé en ce que** le dispositif (40) actionneur est un alternateur, les moyens (32) de commandes étant agencés pour délivrer une puissance électrique variable adaptée pour que l'alternateur délivre au moteur le couple calculé par le module (14) de calcul de pertes.

**5.** Système selon l'une des revendications 1 à 3, **caractérisé en ce que** les moyens (32) de commande transmettent les valeurs de couple calculées par le module (14) de calcul de pertes directement à une génératrice (2) appliquant un couple simulant une charge représentative d'un véhicule, de manière à ce que la génératrice applique le couple simulant la charge du véhicule calculé par un module (10) de simulation et le couple représentatif des pertes calculé par le module (14) de calcul de pertes.

**6.** Procédé de simulation de rendements variables de boîtes de vitesses mécaniques sur banc d'essais moteurs de simulation véhicules, **caractérisé en ce qu'**il comprend les étapes suivantes :

- détermination des pertes liées à l'évolution de la température de l'huile de boîte de vitesses,
- détermination des pertes par traînée lorsque la boîte de vitesses est au point mort
- commande d'un couple supplémentaire à appliquer au moteur en fonction des valeurs desdites pertes liées à l'évolution de la température de boîte de vitesses et/ou des valeurs desdites pertes par traînée lorsque la boîte de vitesses est au point mort.

Figure 1

Figure 2

GENERATRICE

MOTEUR

Alternateur

41

1

Calcul du couple moteur
Simulation véhicule:
Masse, Rboîte, Rroue, Inerties...

40

32

Calcul des pertes
dans la boîte de
vitesses

Transformation:
puissance ⟹ puissance
mécanique      électrique

4

14

Figure 3

Europäisches
Patentamt

European
Patent Office

Office européen
des brevets

**RAPPORT DE RECHERCHE EUROPEENNE**

Numéro de la demande

EP 09 30 5488

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | US 2003/167143 A1 (TURBETT MARLIN R [US] ET AL) 4 septembre 2003 (2003-09-04) * abrégé * * alinéas [0011], [0015], [0063], [0076], [0077], [0100], [0105], [0116], [0120], [0121] * * revendication 1; figure 1 * ----- | 1-6 | INV. G01M13/02 |

|  | DOMAINES TECHNIQUES RECHERCHES (IPC) |
|---|---|
|  | G01M |

Le présent rapport a été établi pour toutes les revendications

| Lieu de la recherche | Date d'achèvement de la recherche | Examinateur |
|---|---|---|
| La Haye | 20 août 2009 | Cilissen, Marcel |

CATEGORIE DES DOCUMENTS CITES

X : particulièrement pertinent à lui seul
Y : particulièrement pertinent en combinaison avec un
 autre document de la même catégorie
A : arrière-plan technologique
O : divulgation non-écrite
P : document intercalaire

T : théorie ou principe à la base de l'invention
E : document de brevet antérieur, mais publié à la
 date de dépôt ou après cette date
D : cité dans la demande
L : cité pour d'autres raisons

& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 09 30 5488

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

20-08-2009

| Document brevet cité<br>au rapport de recherche | Date de<br>publication | Membre(s) de la<br>famille de brevet(s) | Date de<br>publication |
|---|---|---|---|
| US 2003167143 A1 | 04-09-2003 | AUCUN | |

EPO FORM P0460

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1877750 A

- EP 0340206 A